Europäisches Patentamt

European Patent Office

Office européen des brevets

(19)

(11) Publication number : **0 547 828 A1**

# (12) EUROPEAN PATENT APPLICATION

(21) Application number : **92311203.1**

(22) Date of filing : **09.12.92**

(51) Int. Cl.⁵ : **A01M 1/02**

(30) Priority : **19.12.91 GB 9126975**

(43) Date of publication of application :
**23.06.93 Bulletin 93/25**

(84) Designated Contracting States :
**DE FR GB**

(71) Applicant : **AGRISENSE- BCS LIMITED**
**Unit 1, Taffs Mead Road, Treforest Industrial**
**Estate**
**Pontypridd, Mid Glamorgan CF37 5SU, Wales**
**(GB)**

(72) Inventor : **Jones, Owen T.**
**43 Cherry Orchard Road, Lisvane**
**Cardiff, South Glamorgan, Wales (GB)**
Inventor : **Taylor, Rosemary Margaret**
**49 Claude Road, Barry**
**South Glamorgan, Wales (GB)**

(74) Representative : **Bullows, Michael**
**Dow Corning Limited Cardiff Road**
**Barry South Glamorgan CF6 7YL Wales (GB)**

(54) **Insect controlling device.**

(57) A device for the control of flying insects which comprises (A) means for killing and/or trapping flying insects and (B) a water-releasing aqueous gel composition which is located such that (A) is in contact with any water vapour released from (B).

The means (A) may be for example an electric fly killer or a fly trap having thereon an insecticide and/or a tacky adhesive.

FIG.2.

EP 0 547 828 A1

Devices, compositions and methods for controlling and eradicating insect pests have been proposed and used for very many years. In particular much effort has been expended in the control of flying insects such as flies (Musca domestica), moths and mosquitos for health, hygiene and other reasons. Methods which have been and are employed towards such end range from the use of sticky fly papers to the more sophisticated such as insecticides and devices which kill by electrocution or heat.

The operation of such devices and compositions relies on contact occurring between the insect and the device or composition. In the case of an insecticide this can be effected by directing the insecticide composition at the insect, for example by means of a fly spray. In other cases the operation of the device depends either upon chance encounter or by attractant means positioned in the device or in close proximity to it. Such attractant means may be chemical, such as pheromone (see for example U.S. Patent 4,908,979), or visual, as in the use of UV lights with electric fly killers and similar devices. (see for example U.S. Patent 4,949,501). However, the trap and kill rate of such devices leaves something to be desired and there has existed a need to improve their efficiency in this respect. The present invention is concerned with a device whereby a worthwhile improvement in trap/kill efficiency can be achieved.

According to the present invention there is provided a device for the control of flying insects which comprises (A) means for trapping and/or killing flying insects and (B) a water-releasing aqueous gel composition which is located such that (A) is in contact with any water vapour released from (B).

British Patent No. 897 173 discloses a device for exterminating insects comprising a liquid-tight dish-shaped base on which is placed a plate made of absorbent material impregnated with insect stomach poison. European Patent 0 294 175 discloses a dispenser for broadcasting a scent which is said to be particularly useful in connection with insect pheromones and in which a quantity of pheromone-carrying substance is packaged as a solid or gel in a hollow tube. Neither of these two patents discloses a device comprising a trapping and/or killing means in combination with a water-releasing aqueous gel.

The means (A) present in the device of this invention may comprise any device, part of a device or a composition which is effective in trapping and/or killing flying insects. It may be for example a hollow trap such as that described in G.B. 1 580 233, a simple basic adhesive fly paper or more sophisticated embodiments of the adhesive trap which include an attractant UV lamp and other refinements, see for example U.S. Patents Nos. 4,127,961 and 4,117,624. A preferred means (A) is a simple fly trap of the kind which comprises a container or substrate having therein or thereon an insecticide which is disabling or lethal with respect to the insect it is desired to control. Such traps are generally of simple design and may be fabricated from cardboard, paper or a suitable plastic. They can be adapted to be free standing or to be suspended in an elevated position. The traps may function simply as capture devices or they may be treated with or contain an appropriate insecticide, for example a pyrethroid.

Another preferred form of trap or kill means (A) for use in the device of this invention is that which includes spaced electric conductors, generally in the form of a grid, and means for applying a voltage differential between adjacent conductors which is lethal to the insect. Such devices may also include an attractant such as a light and/ or a pheromone. Means of this type are well known in the art and examples of devices incorporating such means are described in U.S. Patent No. 4,959,923.

The gel composition (B) may be any aqueous solid or semi-solid gel which is capable of releasing water vapour at the ambient temperature of operation of the insect controlling device. In areas of temperate climate ambient temperatures will normally range from about 5°C to about 30°C. However, more extreme temperatures, for example above 40°C may be encountered. Aqueous gel compositions and methods for preparing them are well known. They are solid or semi-solid materials which are mixtures in which one component is water but are homogeneous down to substantially colloidal dimensions. They can be obtained by mixing water and a gellant (or thickener) substance. Examples of gellant substances which may be employed to form the aqueous gels (B) are cellulose-based products such as carboxymethyl cellulose, hydroxymethyl cellulose and methyl cellulose, acrylamide and acrylate polymers and copolymers, gelatin, polysaccharides, poloxamers (polyoxyethylene-polyoxypropylene block copolymers), pectins and agar. Some gellants may be employed alone but others such as carboxymethyl cellulose require the presence of polyvalent metal ions to effect crosslinking and gel formation. The preferred gels (B) are the thermo-irreversible gels, for example alginates which form gels in the presence of calcium ions.

If desired the efficacy of the aqueous gel composition under certain conditions may be enhanced by the inclusion in the gel of an attractant for the insect. Where the device is designed for the control of the house fly the attractant may be a food such as yeast or the sex-attractant pheromone Z-9-tricosene. Other additives which may be incorporated into the gel composition include preservatives effective against bacterial and fungicide growth.

In the device of the invention the gel composition (B) should be present in, on or in close proximity to the trapping and/or killing component (A) of the device. If not present in or on the trapping and/or killing component of the device the gel should be positioned in close proximity to said component, that is sufficiently close such that the trapping and/or killing means are in contact with water vapour released from the gel. The actual distance may vary depending on the design of (A) but, in general, close proximity means a distance apart of not greater than about 20 to 50cm. Thus, in the case of a simple hollow trap the gel may be placed in the interior of the trap supported on a tray or shelf, or in a container attached to or supported on the interior surface. Alternatively the gel composition may be present on a tray or in a container situated just above or just below the trapping device. The tray or container may be integral with the structure of the trapping device or may be demountable and/or disposable when the gel is exhausted.

When the gel is present in the interior of a simple trap of the type described above the walls of the trap may advantageously be fabricated from a material which is permeable to water vapour. Alternatively the walls may have one or more holes or small perforations therein. The geometry and locations of such holes and/or perforations may, if desired, be such as to achieve a particular distribution or direction of flow of the released water vapour.

The means (A) may be of the type whereby control and killing of the insect is effected through contact with a series or grid of electrically charged conductors. Usually such devices are fitted with a tray for collecting and facilitating removal of the trapped insects. In such devices the gel composition (B) may be placed in said tray.

The rate at which the gel composition releases water vapour will depend to some extent on the surrounding ambient conditions, that is temperature and relative humidity. The gel formulation may be adapted having regard to such conditions, that is temperature and relative humidity. and to the balance between the trapping/killing efficiency and the desired longevity of the gel. The desired balance may be achieved by appropriate formulation of the gel or by selection of the surface area of gel composition which is exposed to the atmosphere. Preferably the gel composition should contain as high a proportion of water, usually from 60 to 96 percent of the total weight, as is consistent with the desired consistency and physical strength of the composition.

The following Examples illustrate the invention.

<u>Example 1</u>

An aqueous gel was prepared according to the following procedure.

A calcium sequestering agent (Calgon) (0.05g) and a preservative (Nipagin M) (0.2g) were dissolved in distilled water (96.29g). To this solution was then slowly added sodium alginate (3.46g). This composition was designated Phase A. Ground gypsum (0.35g) and distilled water (16.67g) were then added to Phase A with rapid stirring. Samples (18g) of the resulting composition were immediately poured into aluminium dishes having a diameter of 5.6cm and depth of 1cm and allowed to gel.

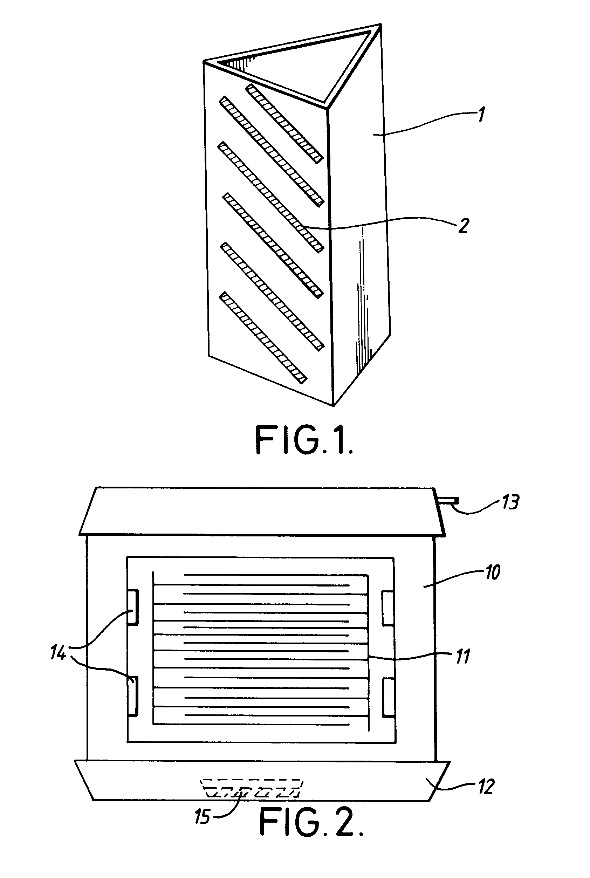

The gel was tested in combination with a fly trap of the type shown in perspective view in Figure 1 hereof, and which comprised a cardboard tube of triangular section (1) having stripes of insecticide (2) on one of its exterior planar surfaces. The height of the tube was 13cm and the sides of the triangular section were each 8cm long.

Two of the said fly traps were placed on tables situated in adjacent corners of the shorter wall of a rectangular test room having dimensions of 2.72m by 4.57m. During the tests the temperature of the room was maintained at 27°C ± 1.5°C. Each fly trap was placed at the centre of a large plastic saucer (diameter 45cm) which functioned as a catchment tray. An 18g sample of gel, in its aluminium tray, was placed immediately in front of and in contact with the insecticide-coated surface of one of the fly traps, the other trap acting as a control.

A jar containing approximately 300 houseflies (Musca domestica) was opened at the centre of the test room to release the flies. After one hour the lid of the jar was replaced to prevent the participation of any inactive flies. At the end of 5 hours the number of dead flies in the catchment saucers was counted and recorded as the Catch. Four replicates of the paired tests were carried out and the average number of catches calculated as a percentage of the number of flies which took off from the release jar. The results were as follows:

|  | Catch (%) |
|---|---|
| Control (no gel) | 9.5 |
| Flytrap and gel | 29.2 |

The test procedure was repeated except that the jar originally contained about 100 flies and the temperature of the test room was maintained at 22°C. The results were as follows:

|  | Catch (%) |
|---|---|
| Control (no gel) | 4.3 |
| Flytrap and gel | 18.0 |

Example 2

The procedure of Example 1 was repeated except that there was incorporated into each sample of the gel during its preparation 0.30g of Z-9-tricosene and 1.0g of yeast. The 18g gel samples were prepared by mixing

Z-9-tricosene      0.3g
yeast      1.0g
distilled water      1.7g
ground gypsum SW   0.063g

and adding the resulting mixture with rapid stirring to 14.937g of Phase A described in Example 1. Four replicates were carried out. The results were as follows:

|  | Catch (%) |
|---|---|
| Control (no gel) | 8.4 |
| Flytrap and gel | 30.5 |

Example 3

In this experiment the gel was tested in combination with an electric fly killer (EFK) of the type shown diagrammatically in Figure 2 and comprising a housing (10) containing an electrically chargeable grid (11) and a catchment tray (12) mounted just below the grid. The figure also shows an entrance (13) for the electrical power and fittings (14) for accepting tubes as UV sources. Two such fly killers were fixed to two opposite walls of the test room described in Example 1 and equidistant from the fly release point at the centre of the room. One of the containers of gel (15) prepared as in Example 1 was placed in a central position in the catchment tray of one of the fly killing devices. The catchment tray of the other was left empty.

During the tests the ultra violet lights of the devices remained inactive and the temperature of the test room maintained at 27°C (± 1.5°C).

A jar containing approximately 300 houseflies was opened at the release point and closed after 1 hour to prevent participation by inactive flies. After 5 hours the numbers of dead flies in the catchment trays were counted and recorded as a percentage of the number of flies which took flight from the release jar. Four replicates were carried out. The results were as follows:

|  | Catch (%) |
|---|---|
| Control (EFK no gel) | 2.7 |
| EFK and gel | 21.3 |

The experiment was repeated employing the same gel which had incorporated therein 0.3g of Z-9-tricosene per 18g test sample. The average catch rates (4 replicates) were as follows:

|  | Catch (%) |
|---|---|
| Control (no gel) | 6.7 |
| Fly killer and tricosene gel | 21.4 |

## Example 4

The procedure of Example 2 was repeated except that the fly trap was a cylindrical tube of approximately the same dimensions and having its outer surface coated with a tacky adhesive.

The percentage catches by the trap were as follows:

|  | Catch (%) |
|---|---|
| Control (no gel | 10 |
| With gel | 38 |

## Example 5

Nipagin M (preservative) (0.2g) and fumaric acid (0.18g) were dissolved in distilled water (49.77g). To this solution were then added carboxymethylcellulose (Blanose cmc 7MR) (3.0g) and hydroxyethylcellulose (Natrosol 250MR) (0.25g) with constant stirring and avoiding aeration. The resulting composition was designated Phase A. A second composition (Phase B) consisting of a solution of aluminium nitrate (0.6g) in distilled water (50g) was then added to Phase A with vigorous agitation. The product was a stable, water-releasing gel.

## Example 6

Guar gum (1.0g) was mixed with distilled water (98.4g). When a 10% solution of borax (0.6g) was added to this mixture with vigorous agitation a stable, water-releasing gel was obtained.

## Example 7

Two electric fly killers with UV lamps were placed in the test room described in Example 1 which was maintained at a temperature of 22°C and relative humidity of about 37%. They were then activated and allowed to reach constant temperature (approximately 31 to 34°C in the catchment tray). A sample of the gel described in Example 1 was placed in the catchment tray of each EFK. The first sample had an exposed area of $8.2 cm^2$ and the second an exposed area of $20.5 cm^2$. Each sample was weighed each hour during a 5 hour period to determine the hourly weight loss. The following values were obtained:

| Area exposed ($cm^2$) | Average weight loss/hour (g) |
|---|---|
| 8.2 | 0.169 |
| 20.5 | 0.338 |

## Example 8

Samples of the gel described in Example 1 were placed in the test room which was maintained at a temperature of 22°C and relative humidity of about 37%. The areas of gel exposed to the atmosphere were respectively $2.1 cm^2$ and $4.1 cm^2$.

The samples were weighed every hour over a period of 5 hours and the average weight loss per hour for each sample was found to be as follows:

| Area exposed ($cm^2$) | Average weight loss/hour (g) |
|---|---|
| 2.1 | 0.0421 |
| 4.1 | 0.0663 |

**Claims**

1. A device for the control of flying insects which comprises (A) means for killing and/or trapping flying insects and (B) a water-releasing aqueous gel composition which is located such that (A) is in contact with any water vapour released from (B).

2. A device as claimed in Claim 1 wherein the killing and/or trapping means (A) is an electric fly killer comprising spaced electric conductors and means for applying a voltage differential between adjacent conductors.

3. A device as claimed in Claim 1 wherein the killing and/or trapping means (A) comprises a fly trap having thereon or therein an insecticide.

4. A device as claimed in Claim 1 wherein the killing and/or trapping means (A) comprises a fly trap having on its exposed surface a tacky adhesive substance.

5. A device as claimed in any one of the preceding claims wherein the aqueous gel composition comprises an alginate.

6. A device as claimed in any one of the preceding claims wherein the gel composition contains a pheromone attractive to flying insects.

7. A device as claimed in Claim 6 wherein the pheromone is attractive to the housefly.

FIG.1.

FIG.2.

**European Patent Office**

# EUROPEAN SEARCH REPORT

Application Number

EP 92 31 1203

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-8 912 389 (WILLIAMS)<br>* page 6, line 13 - line 17 *<br>* page 6, line 28 - line 31; claims 1-3,5,10,16; figures *<br>--- | 1,2,6 | A01M1/02 |
| D,A | US-A-4 908 979 (HOSTETTER)<br>* claims; figures *<br>--- | 1,2,6 | |
| D,A | US-A-4 127 961 (PHILLIPS)<br>* column 1, line 53 - column 2, line 27 *<br>--- | 1,4 | |
| D,A | GB-A-897 173 (BAYER)<br>* claims; figures *<br>--- | 1,3 | |
| D,A | GB-A-1 580 233 (DRANSFIELD)<br>* page 1, line 11 - line 41; figures *<br>--- | 1 | |
| D,A | US-A-4 117 624 (PHILLIPS)<br>* column 1, line 43 - line 63 *<br>* claim 1; figures *<br>--- | 1,4 | |
| D,A | EP-A-0 294 175 (DOW CORNING CORPORATION)<br>* column 4, line 37 - column 5, line 4 *<br>--- | 1,3,6 | TECHNICAL FIELDS SEARCHED (Int. Cl.5 ) |
| D,A | US-A-4 959 923 (AIELLO)<br>* claims; figures *<br>--- | 1,2 | A01M |
| D,A | US-A-4 949 501 (LARKIN)<br>* column 3, line 20 - line 28 *<br>* claims; figures * | 1,2,6 | |

The present search report has been drawn up for all claims

| Place of search | Date of completion of the search | Examiner |
|---|---|---|
| THE HAGUE | 17 MARCH 1993 | PIRIOU J.C. |